# EUROPÄISCHE PATENTSCHRIFT

(11) **EP 3 211 191 B1**
(45) Veröffentlichungstag und Bekanntmachung des Hinweises auf die Patenterteilung: **07.11.2018**
(21) Anmeldenummer: 17156716.7
(22) Anmeldetag: 17.02.2017
(51) Int. Cl.: F02D 41/02, F01N 3/20, F02M 25/022

(54) **HEIZBARER BEHÄLTER FÜR EIN FLUID**
HEATABLE CONTAINER FOR A FLUID
RÉCIPIENT POUVANT ÊTRE CHAUFFÉ POUR UN FLUIDE

(30) Priorität: 23.02.2016 DE 102016202718
(43) Veröffentlichungstag der Anmeldung: 30.08.2017
(73) Patentinhaber: Bayerische Motoren Werke Aktiengesellschaft, 80809 München (DE)
(72) Erfinder: Bruhn, Andreas, 82178 Puchheim (DE); Wolf, Markus, 80809 München (DE)

(56) Entgegenhaltungen:
- EP-A1- 1 473 447
- EP-A2- 1 505 292
- EP-A2- 2 906 792
- WO-A1-2014/202268
- DE-A1-102010 029 269
- DE-A1-102014 200 711
- US-A1- 2008 092 859

## Beschreibung

Die Erfindung betrifft einen Behälter für ein Fluid eines Abgasreinigungssystems zum Behandeln von Abgas einer Brennkraftmaschine, insbesondere für einen Dieselmotor mit einer wässrigen Harnstofflösung, oder einen Behälter für ein Fluid eines Einspritzsystems einer Brennkraftmaschine, insbesondere für einen Ottomotor, nach dem Oberbegriff des Anspruchs 1.

Bei mit Dieselkraftstoff betriebenen Verbrennungsmotoren wird zur Reduzierung von Stickoxiden eine Abgasbehandlung auf der Basis der selektiven katalytischen Reduktion (SCR) durchgeführt. Bei den dazu verwendeten SCR-Abgasreinigungssystemen wird zum Beispiel nach einem Vorkatalysator in den Abgasstrom ein Reduktionsmittel eingespritzt, welches einem im Fahrzeug befindlichen Reduktionsmitteltank entnommen wird. Als Reduktionsmittel kann hierfür eine wässrige Harnstofflösung mit einem Harnstoffanteil von 32,5 Prozent verwendet werden, die bei etwa -11 Grad Celsius gefriert. Um das Einfrieren des Reduktionsmittels zu verhindern, sind herkömmliche Reduktionsmitteltanks mit einer Heizeinrichtung ausgestattet.

Die Wassereinspritzung ist ein Verfahren zur Leistungssteigerung von Verbrennungskraftmaschinen. Um die Maximaltemperatur bei Höchstleistung nicht zu überschreiten, wird destilliertes Wasser in den Ansaugtrakt eines Kolbenmotors eingespritzt. Ein Wasser/Alkohol-Gemisch hat einen ähnlichen Effekt. Die verdunstende Flüssigkeit hat eine kühlende Wirkung und vermindert die Verdichtungsarbeit. Auch Einspritzung während des Verbrennungstaktes zur Dampfkrafterzeugüng und zur Reduktion der Abgastemperatur und damit zur Reduktion des Abgasgegendruckes wird praktiziert. Das Verfahren kann auch den Schadstoffausstoß, insbesondere der Stickoxide, von Verbrennungsmotoren senken.

Das eingespritzte Fluid in den Luft-Ansaugtrakt bewirkt durch die aufzubringende Verdunstungswärme eine effektive Ladeluftkühlung und erreicht dadurch auch eine Innenkühlung des Motors. Durch die kältere Verbrennungsluft und damit deren höhere Dichte ergibt sich eine Leistungssteigerung. Des Weiteren kann der Zündwinkel weiter in Richtung Frühzündung eingestellt werden, da die kühlere Brennluft weniger zum Klopfen neigt. Beigemischtes Methanol erhöht zudem die Klopffestigkeit enorm und fungiert als zusätzlicher Treibstoff. Moderne Wassereinspritzanlagen regeln die Einspritzmenge mittels der Daten des Luftmassenmessers, des anliegenden Ladedrucks, der eingespritzten Kraftstoffmenge und der Abgastemperatur.

Andererseits erfolgt ein Einsatz der Wassereinspritzung zur Beeinflussung des Abgasverhaltens von Dieselmotoren.

Die DE 10 2010 029 269 A1 beschreibt einen Fluidtank für ein Kraftfahrzeug mit einem Motor und einem Kühlsystem, das ausgebildet ist, um von dem Motor im Betrieb erzeugte Wärme von dem Motor abzuführen. Der Fluidtank hat ein Tankvolumen zur Aufnahme eines Fluids und wenigstens ein Heizelement. Das Heizelement ist derart mit dem Kühlsystem verbindbar, dass das Fluid, das in dem Tankvolumen gespeichert ist, durch die von dem Motor im Betrieb erzeugte Wärme beheizbar ist.

Außerdem ist aus der DE 10 2011 108 213 A1 ist ein beheizbarer Behälter zur Verwendung als Reduktionsmitteltank für ein gefrierempfindliches Reduktionsmittel bekannt. Dieser wird mittels elektrischen Heizelementen beheizt und ist sehr kompliziert aufgebaut, was die Herstellkosten erhöht. Zur Bevorratung von einzuspritzendem Wasser ist ein solcher Behälter auch denkbar.

Des Weiteren zeigt die DE 10 2010 029 269 A1 Motorkühlmittelleitungen auch an einem Behälterboden, hinter einer Schutzwand zur Erwärmung eines Behälterinhalts. Zum selben Zweck zeigt die DE 10 2014 200 711 A1 ein fest integriertes Fluid-Wärmetauschelement in einer Bodenplatte eines Vorratsbehälters und die WO 2013/152823 A2 zeigt einen mit Kühlwasser durchflossenen Boden eines Vorratsbehälters.

Der nächstliegende Stand der Technik, die WO 2014/202268 A1 zeigt mehrere, in verschiedenen Nuten des Bodens unter dem Behälter verlegte, abgedeckte Heizelemente, auch elektrisch beheizt.

Daher ist es Aufgabe der Erfindung, einen heizbaren Behälter für ein Fluid zum Zuführen in eine Kraftstoffleitung oder in eine Abgasleitung oder in einen Ansaugtrakt oder in einen Zylinder einer Brennkraftmaschine eines Kraftfahrzeugs zu schaffen, der auf einfache Weise eine sichere Versorgung eines Brennraums und/oder eines Abgasreinigungssystems mit dem Fluid, insbesondere Reduktionsmittel für eine SCR-Abgasanlage oder Wasser, gewährleistet, indem ein Flächenheizelement außen am Behälter gehalten wird, dadurch, dass es in eine Tasche eingebracht ist.

Diese Aufgabe wird durch die Merkmale des Patentanspruchs 1 gelöst. Bevorzugte Weiterbildungen der Erfindung beschreiben die abhängigen Ansprüche.

Erfindungsgemäß ist der heizbare Behälter für ein Fluid, zum Zuführen in einen Zylinder oder in einen Ansaugtrakt oder in eine Kraftstoffleitung oder in eine Abgasleitung einer Brennkraftmaschine eines Kraftfahrzeugs, wobei der Behälter durch wenigstens ein Flächenheizelement beheizbar ist, das außen an wenigstens einer Behälterwand, in eine von außerhalb des Behälters zugängliche Tasche eingebracht ist, wobei die Tasche durch eine doppelte Behälterwand des Behälters gebildet ist, dadurch gekennzeichnet, dass diese einstückig mit dem Behälter so ausgebildet ist, dass das Flächenheizelement, das den ganzen Boden des Behälters von außen bedeckt, von einer Taschenöffnung ausgehend, durch die das Flächenheizelement in die Tasche einschiebbar ist, bis zu einer am Boden des Behälters, an einer geodätisch tiefsten Stelle, befindlichen Entnahmevorrichtung zur Entnahme von Fluid.

Das hat den Vorteil, dass ins Innere des Behälters keine elektrischen Versorgungsleitungen eingebracht werden müssen und so sowohl die Dichtheit des Behälters, als auch die Vermeidung von Störungen der Elektrik hervorragend gewährleistet sind, durch einen preiswert herstell- und handhabbaren heizbaren Behälter nach der Erfindung. Fahrzeuge mit demselben Behälter können, auch nachträglich, auf einfache Weise, je nach Notwendigkeit, mit Flächenheizelementen unterschiedlicher Heizleistung ausgestattet und Reparaturen können schnell und einfach durchgeführt werden. Dabei kann das Flächenheizelement an seiner nicht an der Behälterwand anliegenden Seite von einer Wärmeisolationsschicht abgedeckt sein. Zusätzlich kann eine Wandstärke des vom Flächenheizelement abgedeckten Bereichs der Behälterwand reduziert sein. Wenn das Flächenheizelement im Bereich des Bodens des Behälters, in einem doppelten Boden, angebracht ist und die Tasche durch einen von außen zugänglichen doppelten Boden des Behälters gebildet ist hat das weiter den Vorteil, dass dieser auf einfache Weise einstückig mit dem Behälter ausgebildet werden kann und das Flächenheizelement bei der Montage einfach nur eingeschoben werden muss.

Bevorzugte Ausführungen der Erfindung sind dadurch gekennzeichnet, dass das Flächenheizelement im Bereich des Bodens des Behälters, in einem doppelten Boden, angebracht ist. Wenn die Tasche durch einen von außen zugänglichen doppelten Boden des Behälters gebildet ist hat das den Vorteil dass dieser auf einfache Weise einstückig mit dem Behälter ausgebildet weden kann und das Flächenheizelement bei der Montage einfach nur eingeschoben werden muss.

All dies ist vorteilhaft bezüglich besserer Wärmeübertragung, einfacher Anbringung des Flächenheizelements und guter Auftauwirkung in Bezug auf die Entnahmevorrichtung.

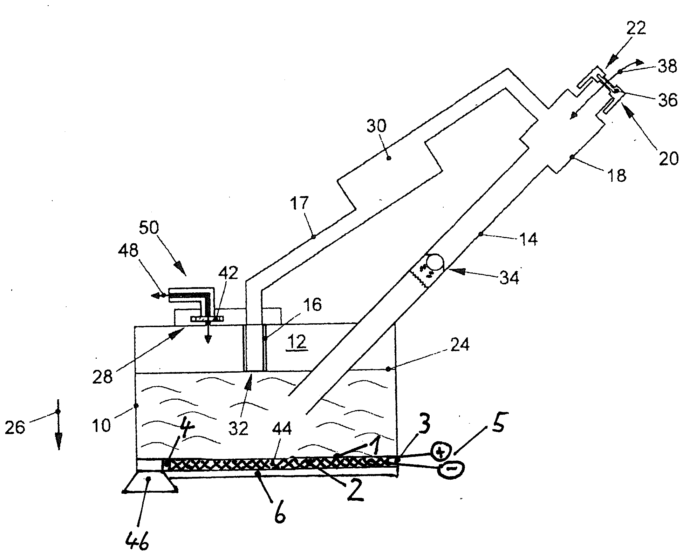

Ein bevorzugtes Ausführungsbeispiel der Erfindung ist in der nachfolgenden Beschreibung und der zugehörigen Zeichnung näher dargestellt. Dazu zeigt die einzige Figur in schematischer Darstellung einen erfindungsgemäßen Behälter für ein flüssiges Additiv zum Zuführen in einen Zylinder oder in einen Ansaugtrakt oder in eine Kraftstoffleitung oder in eine Abgasleitung einer Brennkraftmaschine eines Kraftfahrzeugs.

Der in der einzigen Figur dargestellte heizbare Behälter 10 ist in Einbaulage dargestellt, wobei eine Schwerkraftrichtung 26 nach unten gerichtet ist, und weist einen Innenraum 12 auf, in den ein Einfüllrohr 14 und ein Tauchrohr 16 mündet. Das Einfüllrohr 14 dient zum Befüllen des Innenraumes 12 des Behälters 10 mit einem Fluid 24, wie beispielsweise einer wässrigen Harnstofflösung zur Behandlung von Abgas einer nicht dargestellten Brennkraftmaschine. Eine derartige Harnstofflösung hat die Eigenschaft, dass diese bei einer Umgebungstemperatur von ca. -11 Grad Celsius gefriert. Wegen dieser besonderen Eigenschaft des Fluides 24 müssen bestimmte Vorkehrungen getroffen werden, um die Funktionsfähigkeit des Behälters 10 bei allen vorkommenden Umgebungstemperaturen zu gewährleisten.

In dem Einfüllrohr 14 ist ein Befüllkopf 18 an einem von dem Innenraum 12 abgewandten Ende 22 angeordnet und dieses Ende 22 ist mit einem lösbaren Tankdeckel 20 verschlossen. Der Befüllkopf 18 und das Ende 22 mit dem Tankdeckel 20 befinden sich geodätisch höher als eine geodätisch höchste Stelle 28 des Behälters 10. Das Tauchrohr 16 ragt in den Innenraum 12 hinein und ist über eine Entlüftungsleitung 17 mit dem Befüllkopf 18 derart verbunden, dass über das Tauchrohr 16 und die Entlüftungsleitung 17 eine fluidleitende Verbindung zwischen dem Innenraum 12 und dem Befüllkopf 18 hergestellt ist. In der Entlüftungsleitung 17 ist ein Ausperlbehälter 30 angeordnet. In dem Einfüllrohr 14 ist ein Rückschlagventil 34 angeordnet, welches einen Fluidstrom in Richtung des Innenraumes 12 des Behälters 10 zulässt und einen Fluidstrom in entgegengesetzter Richtung, also vom Innenraum 12 des Behälters 10 über das Einfüllrohr 14 zum Befüllkopf 18, blockiert.

An einem Boden 1 des Behälters 10 ist an einer geodätisch tiefsten Stelle eine Entnahmevorrichtung 46 zur Entnahme von Fluid 24 aus dem Behälter 10 vorgesehen, um das Fluid 24 einer bestimmungsgemäßen Verwendung zuzuführen. Dies ist beispielsweise eine Abgasbehandlung von Abgasen der Brennkraftmaschine in einem Kraftfahrzeug mit dem Fluid 24 zur Schadstoffreduktion.

In dem Tankdeckel 20 ist eine erste Be- und Entlüftungsvorrichtung 36, wie beispielsweise ein Ventil bzw. eine PTFE-Membran (Polytetrafluorethylen) vorgesehen. Die erste Be- und Entlüftungsvorrichtung 36 ist dicht bzw. undurchlässig für Flüssigkeiten bzw. für das Fluid 24 und durchlässig für Gase, wie mit Pfeil 38 angedeutet. Ein dem Innenraum 12 zugewandtes, offenes Ende 32 des Tauchrohres 16 dient als Entlüftung des Innenraumes 12 während des Befüllens des Behälters 10 und begrenzt gleichzeitig den maximalen Fluidpegel in dem Innenraum 12 durch Fluten des Befüllkopfs 18 und nachfolgendes Abschalten der Zapfpistole, die mindestens teilweise in den Befüllkopf 18 hinein ragt. Unmittelbar nach dem Abschalten der Zapfpistole befindet sich somit Fluid 24 in dem Tauchrohr 16, der Entlüftungsleitung 17 und dem Einfüllrohr 14 bis hinauf zum Befüllkopf 18. Sollte zu diesem Zustand beispielsweise ein mit dem Behälter 10 ausgerüstetes Fahrzeug für längere Zeit bei Außentemperaturen kleiner dem Gefrierpunkt des Fluides 24 abgestellt werden, wäre eine Belüftung des Behälters 10 in einem anschließenden längeren Fahrbetrieb, bei dem kontinuierlich Fluid 24 aus dem Innenraum 12 beispielsweise zur Abgasbehandlung entnommen wird, nicht sichergestellt, da eine an dem Boden 1 angeordnete Tankheizung 44 die Entlüftungsleitung 17 nicht auftauen kann. Um in diesem Zustand eine Verformung des Behälters 10 durch Verbrauch des Fluides 24 zu verhindern, ist vorgesehen, dass an der geodätisch höchsten Stelle 28 des Behälters 10 eine zweite Be- und Entlüftungsvorrichtung 42 beispielsweise in Form eines Ventils vorgesehen ist, insbesondere als PTFE-Membran (Polytetrafluorethylen) ausgebildet, die über ein Rohr 50 mit der Umgebung verbunden ist. Die zweite Be- und Entlüftungsvorrichtung 42 ist dicht bzw. undurchlässig für Flüssigkeiten bzw. für das Fluid 24 und undurchlässig für Gase, wie mit Pfeil 48 angedeutet. Auf diese Weise kann mittels des Durchtritts von Gasen durch die erste Be- und Entlüftungsvorrichtung 36 ein Druckausgleich mit der Umgebung erfolgen. Durch die Anordnung der zweiten Be- und Entlüftungsvorrichtung 42 kann über diese ein Druckausgleich zwischen dem Innenraum 12 des Behälters 10 und der Umgebung auch dann erfolgen, wenn sich in dem Tauchrohr 16 bzw. der Entlüftungsleitung 17 ggf. gefrorenes Fluid 24 befindet.

Gefrorenes Fluid 24 im Behälter 10 wird gemäß der Erfindung durch Erwärmen des Bodens 1 von außerhalb des Behälters 10 aufgetaut. Dazu liegt ein elektrisches Flächenheizelement 2 mit elektrischen Kontaktanschlüssen 5 der Tankheizung 44 außen am Boden 1 des Behälters 10 an und wird dort gehalten, indem es in eine Tasche 4, ausgebildet am Boden 1, eingelegt ist. Das Flächenheizelement 2 bedeckt den ganzen Boden 1 des Behälters 10 von außen, von einer Taschenöffnung 3 ausgehend, durch die das Flächenheizelement 2 in die Tasche 4 eingeschoben wird, bis zu einer am Boden 1 des Behälters 10 an einer geodätisch tiefsten Stelle befindlichen Entnahmevorrichtung 46 zur Entnahme von Fluid 24, um dieses einer bestimmungsgemäßen Verwendung zuzuführen. Diese bestimmungsgemäße Verwendung ist beispielsweise eine Abgasbehandlung von Abgasen der Brennkraftmaschine des Kraftfahrzeugs mit dem Fluid 24 zur Schadstoffreduktion.

Zusätzlich ist das Flächenheizelement 2 an seiner nicht am Boden 1 anliegenden Seite von einer Wärmeisolationsschicht 6 abgedeckt, die von unten an der Tasche 4 angebracht ist. Alternativ kann die Wärmeisolationsschicht auch in die Tasche mit eingebracht oder in dieser, unterhalb des Flächenheizelements 2 angebracht sein. Außerdem ist es möglich, dass die Wandstärke des Bodens 1, insbesondere im vom Flächenheizelement 2 abgedeckten Bereich, reduziert ist, um die Wärmeübertragung zum Fluid hin zu verbessern.

Alternativ zu der beschriebenen einstückigen Ausführung des Behälters 10 kann dieser erfindungsgemäß auch zwei oder mehrteilig ausgebildet sein, vorzugsweise dann mit einer Bodenschale, die wenigstens teilweise vom Flächenheizelement 2 von außen her bedeckt ist.

Außerdem kann als Fluid auch Wasser im Behälter 10 zum Einsatz kommen. Die Wassereinspritzung ist ein Verfahren, zum Beispiel zur Leistungssteigerung von Verbrennungskraftmaschinen. Um die Maximaltemperatur bei Höchstleistung nicht zu überschreiten, wird destilliertes Wasser zum Beispiel in den Ansaugtrakt des Verbrennungsmotors eingespritzt.

## Patentansprüche

1. Heizbarer Behälter (10) für ein Fluid (24), zum Zuführen in einen Zylinder oder in einen Ansaugtrakt oder in eine Kraftstoffleitung oder in eine Abgasleitung einer Brennkraftmaschine eines Kraftfahrzeugs, wobei der Behälter (10) durch wenigstens ein Flächenheizelement (2) beheizbar ist, das außen an wenigstens einer Behälterwand, in eine von außerhalb des Behälters (10) zugängliche Tasche (4) eingebracht ist, wobei die Tasche (4) durch eine doppelte Behälterwand des Behälters (10) gebildet ist, **dadurch gekennzeichnet, dass** diese einstückig mit dem Behälter (10) so ausgebildet ist, dass das Flächenheizelement (2), das den ganzen Boden (1) des Behälters (10) von außen bedeckt, von einer Taschenöffnung (3) ausgehend, durch die das Flächenheizelement (2) in die Tasche (4) einschiebbar ist, bis zu einer am Boden (1) des Behälters (10), an einer geodätisch tiefsten Stelle, befindlichen Entnahmevorrichtung (46) zur Entnahme von Fluid (24).

2. Heizbarer Behälter (10) nach Anspruch 1, **dadurch gekennzeichnet, dass** das Flächenheizelement (2) an seiner nicht an der Behälterwand anliegenden Seite von einer Wärmeisolationsschicht (6) abgedeckt ist.

3. Heizbarer Behälter (10) nach einem der Ansprüche 1 oder 2, **dadurch gekennzeichnet, dass** eine Wandstärke des vom Flächenheizelement (2) abgedeckten Bereichs der Behälterwand reduziert ist.

## Claims

1. A heatable container (10) for a fluid (24), for feeding into a cylinder or into an intake passage or into a fuel line or into an exhaust gas line of an internal combustion engine of a motor vehicle, wherein the container (10) can be heated by at least one surface heating element (2), which is introduced from outside on at least one container wall into a pocket (4) accessible from outside the container (10), wherein the pocket (4) is formed by a double container wall of the container (10), **characterised in that** this is formed in one piece with the container (10), such that the surface heating element (2), which covers the entire base (1) of the container (10) from outside, can be inserted proceeding from a pocket opening (3), through which the surface heating element (2) can be inserted into the pocket (4) as far as a removal device (46), which is disposed on the base (1) of the container (10), at a geodetically deepest point, for removing fluid (24).

2. A heatable container (10) according to claim 1, **characterised in that** the surface heating element (2) is covered on its side not resting against the container wall by a heat insulation layer (6).

3. A heatable container (10) according to either one of claims 1 or 2, **characterised in that** the wall thickness of the region of the container wall covered by the surface heating element (2) is reduced.

## Revendications

1. Récipient (10) pouvant être chauffé destiné à renfermer un fluide (24) à transférer dans un cylindre, ou dans une ligne d'aspiration, ou dans une conduite de carburant ou dans une conduite de gaz d'échappement d'un moteur à combustion interne d'un véhicule, le récipient (10) pouvant être chauffé par au moins un élément de chauffage plat (2) qui est introduit extérieurement sur au moins une paroi du récipient (10), dans une poche (4) accessible de l'extérieur du récipient (10), la poche (4) étant formée par une double paroi du récipient (10), **caractérisé en ce que**
cette poche est réalisée en une seule pièce avec le récipient (10) de sorte que l'élément de chauffage plat (2) qui recouvre par l'extérieur la totalité du fond (1) du récipient (10) puisse être déplacé par translation à partir d'une ouverture de poche (3) au travers de laquelle l'élément de chauffage (2) peut être déplacé par translation dans la poche (4) jusqu'à un dispositif de prélèvement (46) situé au fond (1) du récipient (10) à l'emplacement géodiquement le plus profond pour permettre le prélèvement du fluide (24).

2. Récipient (10) pouvant être chauffé conforme à la revendication 1, **caractérisé en ce que**
l'élément de chauffage plat (2) est recouvert par une couche d'isolation thermique (6) sur sa face non appliquée sur la paroi du récipient.

3. Récipient (10) pouvant être chauffé conforme à l'une des revendications 1 et 2,
**caractérisé en ce que**
l'épaisseur de la zone de la paroi du récipient recouverte par l'élément de chauffage plat (2) est réduite.
